# FASCICULE DE BREVET EUROPEEN

(11) **EP 1 852 245 B1**
(45) Date de publication et mention de la délivrance du brevet: **13.06.2018**
(21) Numéro de dépôt: 07290504.5
(22) Date de dépôt: 24.04.2007
(51) Int. Cl.: B29C 70/48, B29C 70/24, B29C 45/14, B29C 70/46, B29C 70/54, F16L 27/107, B29K 21/00

(54) **Procédé de fabrication d'un composite polymère(s)/renfort textile ou métallique, composite obtenu par ce procédé et soufflet de découplage qui en est constitué**
Verfahren zur Herstellung eines Verbundstoffs aus Polymer(en) und einer Textil- oder Metallverstärkung, mittels dieses Verfahrens erhaltener Verbundstoff und daraus bestehende Entkopplungsmanschette
Method of forming a polymer/textile or metal reinforcement composite, composite obtained by this method and uncoupling bellows made from same

(30) Priorité: 04.05.2006 FR 0603972
(43) Date de publication de la demande: 07.11.2007
(73) Titulaire: Hutchinson, 75008 Paris (FR)
(72) Inventeur: Blin, Philippe, 37260 Monts (FR); Zarife, Victor, 45120 Cepoy (FR); Ciolczyk, Jean-Pierre, 45200 Montargis (FR); Zannelli, Carole, 42320 La Grand Croix (FR)
(74) Mandataire: Gevers & Orès

(56) Documents cités:
- WO-A-99/56922
- DE-A1- 10 036 235
- GB-A- 2 082 113
- JP-A- 2000 346 252

## Description

La présente invention concerne un procédé de fabrication d'un composite polymère(s)/ renfort textile ou métallique au moins en partie à surface de révolution, un composite obtenu par ce procédé, tel qu'une durite destinée à transporter de l'air comprimé, et un soufflet de découplage qui en est constitué. L'invention s'applique notamment à un raccord ou à un soufflet de découplage pour un système d'admission d'air dans un moteur à turbocompresseur d'un véhicule automobile de type tourisme, poids-lourd ou autobus, voire agricole.

De manière connue, les soufflets de découplage montés entre un élément du système d'admission d'air du moteur turbocompressé et la caisse du véhicule sont généralement constitués d'une pièce tubulaire multicouches présentant deux parties d'extrémité de raccordement et une partie centrale ondulée, et comprenant au moins :
- une couche interne étanche et résistant à l'agressivité du fluide transporté qui est de l'air chargé d'huile,
- une structure intermédiaire de renfort textile à mailles, et
- une couche externe résistant à l'environnement extérieur dans lequel se situe le soufflet.

D'une manière générale, les constructeurs automobiles imposent notamment que ces soufflets puissent supporter l'ensemble des débattements du moteur dans trois directions, ce qui est obtenu par la présence d'ondulations dans la partie centrale des soufflets qui vont travailler en traction/ compression/ cisaillement et se déformer en conséquence en entraînant également la transmission d'efforts. Or, l'expérience montre que la transmission d'efforts à la caisse du véhicule peut se traduire par l'apparition de phénomènes acoustiques perceptibles à l'intérieur de l'habitacle du véhicule et donc nuisibles au confort des passagers.

Par ailleurs, il est souhaitable que ces soufflets ne subissent pratiquement pas de flambage sous pression, un tel flambage pouvant les amener au contact d'une pièce du moteur, ce qui peut les endommager.

Enfin, ces soufflets de découplage présentent également des anneaux rigides de maintien (métalliques ou plastiques) qui sont disposés dans les creux des ondulations et qui évitent notamment l'expansion radiale des soufflets sous l'action de la pression du fluide.

Ces soufflets composites, généralement textile/ caoutchouc, sont fabriqués à l'heure actuelle en utilisant une technique de confection, comprenant par exemple un calandrage du caoutchouc constituant ces couches interne et externe - typiquement à base de caoutchouc silicone - sous forme de feuille ou sur le textile, puis une solidarisation de ces couches par enroulement radial directement ou indirectement sur un outillage représentatif de la structure à ondulations précitées.

Un inconvénient majeur de ce procédé de confection réside dans la succession de ces différentes étapes à mettre en oeuvre et notamment dans cette opération d'enroulement radial et, par conséquent, dans la durée des cycles de confection et le coût opératoire relativement élevés en résultant.

Le document US-A-6 116 288 présente un tuyau pour admission d'air incorporant un soufflet et comportant un corps principal souple formé d'un élastomère thermoplastique oléfinique qui est renforcé, sur sa face radialement externe, par des anneaux de renforcement rigides, séparés entre eux et formés de polypropylène. Ce tuyau est fabriqué par un procédé d'extrusion-soufflage mis en oeuvre dans une machine de soufflage.

Un inconvénient de ce procédé d'extrusion-soufflage est qu'il n'est pas utilisable pour l'obtention de composites textile ou métal / caoutchouc à insert de renforcement continu à mailles de type tricot ou tresse.

Le document WO-A-99/56922 divulgue un procédé de moulage par injection d'un composite caoutchouc silicone / renfort textile qui est basé sur l'utilisation d'une composition de caoutchouc spécifiquement de type silicone bicomposants, que l'on injecte dans un moule à injection horizontal. La composition de caoutchouc silicone ayant été injectée s'écoule sur la face radialement externe du renfort textile préalablement disposé dans le moule autour d'un noyau, pendant que l'on maintient en place le renfort dans le moule. Le document DE-A-10036235 divulgue un procédé de fabrication d'un composite caoutchouc / textile (e.g. de type tissu ou tricot) destiné à former un tuyau souple renforcé, via un moulage par injection mis en oeuvre dans un moule horizontal. Un but de la présente invention est de proposer un nouveau procédé de fabrication d'au moins un composite polymère(s)/ renfort textile ou métallique au moins en partie à surface de révolution, tel que défini dans la revendication 1. Par composition de polymère, on entend de manière connue dans la présente description une composition à base ou formée d'au moins un polymère, tel qu'un élastomère, un élastomère thermoplastique ou encore un polymère thermoplastique (i.e. qui en est constituée à titre majoritaire en plus d'un ou de plusieurs additifs usuels, ou bien qui en est exclusivement constituée).

On notera que ce procédé de surmoulage selon l'invention permet avantageusement de fabriquer plusieurs composites à la fois dans un même moule à injection, par exemple deux composites respectivement destinés à former deux tuyaux composites souples de type durites, après réticulation de ladite ou chaque composition de polymère par chauffage dans ledit moule.

Selon une autre caractéristique préférentielle de l'invention, l'on injecte ladite composition de polymère à une pression telle que celle-ci traverse les mailles dudit insert préformé, de telle sorte que ledit ou chaque composite présente ladite composition de polymère sur chacune de ses deux faces radialement interne et externe (on parle alors de composite à revêtement « bicouche », avec deux couches de polymère(s) respectivement destinées à être en contact avec le fluide transporté et à protéger l'insert sur ses deux faces radialement interne et externe).

Egalement à titre préférentiel, ledit ou chaque composite présente une pluralité de crêtes qui sont séparées deux à deux entre elles par des creux, de sorte à former des ondulations périphériques faisant saillie radialement vers l'extérieur dudit composite, et/ou présente au moins un coude à extrémité cylindrique ou tronconique.

Selon l'invention, on notera que ladite composition de polymère injectée s'écoule axialement au contact dudit insert préformé (i.e. parallèlement à l'axe de révolution dudit insert).

Selon l'invention, ledit insert préformé est obtenu par une compression radiale dudit insert préalablement positionné sur un noyau dudit moule, via la fermeture de coquilles dudit moule contre ledit noyau pour plaquer ledit insert à l'état préformé sur ledit noyau.

Conformément à l'invention :
- l'on bloque axialement l'insert préformé par un pincement d'une portion de retroussement dudit premier bord périphérique d'extrémité, suite à la fermeture d'un couvercle du moule que l'on amène en regard d'une extrémité du noyau et contre lesdites coquilles ou bien, en variante, l'on bloque radialement l'insert préformé par un pincement dudit premier bord d'extrémité mis en oeuvre via un serrage de deux demi-coquilles extérieures contre une coiffe supérieure d'un couvercle du moule que l'on amène en regard d'une extrémité du noyau, ce premier bord d'extrémité de l'insert étant dans ce cas pincé entre ces demi-coquilles et cette coiffe ;
- on injecte ladite composition de polymère via une buse d'injection dont la sortie communique avantageusement avec un espace interstitiel compris entre ledit couvercle et ladite extrémité dudit noyau ;
- ladite composition de polymère injectée s'écoule avantageusement du centre de ladite extrémité dudit noyau vers ledit premier bord périphérique d'extrémité dudit insert, puis axialement jusqu'à un second bord périphérique d'extrémité dudit insert ; et
- ladite extrémité dudit noyau présente une surface adaptée pour permettre l'écoulement de ladite composition de polymère vers ledit premier bord périphérique d'extrémité.

On notera que le pincement par blocage axial ou radial précité dudit premier bord d'extrémité de l'insert permet avantageusement d'empêcher l'insert de glisser axialement, tout en s'opposant au reflux de la composition injectée.

On notera également que cette injection annulaire, via ce pincement dudit premier bord périphérique d'extrémité de l'insert plaqué contre ledit noyau, permet de remplir cet insert d'une façon homogène, sans déformer pour autant ses mailles.

On notera en outre que ladite coiffe, qui est utilisée dans la variante précitée pour le pincement radial dudit premier bord périphérique de l'insert via lesdites demi-coquilles, permet également de faciliter le chargement de l'insert et le démoulage du composite obtenu, au moyen d'une traction de ce dernier par cet insert. Plus précisément selon cette variante, on dépose cette coiffe de manière centrée sur le noyau, étant précisé que son maintien peut être amélioré par des plots magnétiques, par exemple, et l'on enfile l'insert autour de la coiffe et du noyau.

Selon l'invention, on notera que ledit noyau, de type chauffant, permet la réticulation de ladite ou chaque composition de polymère dans ledit moule.

Selon d'autres caractéristiques préférentielles de l'invention :
- ledit ou chaque insert utilisé pour former ledit ou chaque composite peut présenter des mailles très serrées pour son plaquage sur ledit noyau du moule à injection, et
- ledit ou chaque composite obtenu peut comporter deux inserts identiques ou différents disposés radialement l'un sur l'autre, l'un étant conçu pour présenter une tenue satisfaisante aux conditions d'injection et l'autre pour optimiser le remplissage par la composition injectée et la tenue mécanique de l'ensemble.

De préférence, ledit insert à mailles est de type tricot textile et il doit être, d'une part, suffisamment résistant aux conditions de température (pouvant aller jusqu'à 200° C ou au-delà) et de pression (pouvant se traduire par une force de traction d'environ 4.10⁵ N) inhérentes à l'injection de ladite composition de polymère et, d'autre part, suffisamment souple pour pouvoir se déformer dans toutes les directions et éventuellement présenter lesdites ondulations.

On utilise préférentiellement un tricot à mailles « Jersey » et, à titre encore plus préférentiel, un tel tricot « Jersey » comportant des fils à base d'aramide (e.g. de dénomination commerciale « Kevlar » ou « Nomex ») dans le cas de températures typiquement comprises entre 175° C et 200° C dans ledit moule et/ou d'un polyester (le terme « fil » désignant ici de manière connue aussi bien un filé à base d'une multitude de filaments élémentaires de faible diamètre qui sont tordus ensemble, qu'un retors obtenu par torsion de plusieurs filés).

En variante, on peut également utiliser un tricot comportant des fils à base de polyesters aliphatiques (e.g. de type polyéthylène téréphtalate) ou de polyamides aliphatiques (e.g. de type polyamide 6,6), ou un mélange de fibres résistant à des hautes et basses températures.

Avantageusement, ladite composition de polymère est à base d'au moins un élastomère ou élastomère thermoplastique qui est apte à résister aux huiles et à l'air comprimé et qui est choisi dans le groupe constitué par les polyacrylates, les copolymères d'éthylène et d'acrylate de méthyle, les élastomères fluorocarbonés, les élastomères fluorosilicones, les polyéthylènes chlorosulfonés (e.g. de dénomination commerciale « Hypalon »), les polychloroprènes et les caoutchoucs nitriles, et les vulcanisats thermoplastiques (TPV).

A titre encore plus avantageux, ladite composition de polymère est à base d'un polyacrylate ou d'un copolymère d'éthylène et d'acrylate de méthyle (par exemple de dénomination « VAMAC »).

On notera que l'on utilise avantageusement des élastomères autres que des caoutchoucs silicones, lesquels présentent l'inconvénient connu d'être quelque peu perméables aux huiles de lubrification des moteurs turbocompressés en raison de leur porosité, et que les polyacrylates ou les copolymères d'éthylène et d'acrylate de méthyle qui sont utilisés à titre préférentiel présentent notamment l'avantage d'être moins coûteux que les élastomères fluorosilicones ou fluorocarbonés, lesquels sont parfois utilisés en lieu et place ou en complément de ces caoutchoucs silicones.

Un composite polymère(s)/ renfort textile ou métallique au moins en partie à surface de révolution selon l'invention, tel qu'une durite destinée à transporter de l'air comprimé, ledit composite comportant au moins un insert de renforcement à mailles qui est de type tricot, tissu ou tresse et qui est recouvert d'au moins une composition de polymère sur l'une au moins de ses faces, est moulé par injection, est tel que la composition de polymère est à base d'au moins un élastomère qui est apte à résister aux huiles et à l'air comprimé et qui est choisi dans le groupe constitué par les polyacrylates, les copolymères d'éthylène et d'acrylate de méthyle, les élastomères fluorocarbonés, les élastomères fluorosilicones, les polyéthylènes chlorosulfonés, les polychloroprènes, les caoutchoucs nitriles et les vulcanisats thermoplastiques (TPV), et tel que ce composite est obtenu par le procédé défini ci-dessus de telle sorte que la composition de polymère recouvre la face radialement interne de l'insert de manière homogène dans les directions axiale et radiale et recouvre en outre la face radialement externe de l'insert. Un soufflet de découplage selon l'invention, en particulier pour un système d'admission d'air dans un moteur à turbocompresseur d'un véhicule automobile, ledit soufflet présentant une pluralité de crêtes qui sont séparées deux à deux entre elles par des creux de sorte à former des ondulations périphériques, est constitué d'un composite selon l'invention tel que défini ci-dessus.

De préférence, ledit soufflet est pourvu d'anneaux métalliques ou plastiques à l'emplacement desdits creux, de sorte que les ondulations dudit soufflet conservent leur forme en utilisation.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique d'un système d'admission d'air dans un moteur à turbocompresseur, ce système comprenant notamment un échangeur air/air entre la sortie turbo et l'entrée du collecteur d'admission d'air du moteur,
la figure 2 est une vue en coupe axiale d'un soufflet de découplage selon l'invention qui est monté en entrée ou en sortie de l'échangeur air/air de la figure 1,
la figure 3 est une vue en perspective du soufflet de découplage de la figure 2,
la figure 4 est une vue schématique en coupe axiale d'un moule à injection illustrant une première étape du procédé de surmoulage selon l'invention,
la figure 5 est une vue schématique en coupe axiale d'un moule à injection illustrant une seconde étape du procédé de surmoulage selon l'invention,
la figure 6 est une vue schématique en coupe axiale d'un moule à injection illustrant une troisième étape du procédé de surmoulage selon l'invention,
la figure 7 est une vue schématique en coupe axiale d'un moule à injection illustrant une quatrième étape du procédé de surmoulage selon l'invention, et
la figure 8 est une vue schématique en coupe axiale d'un moule à injection illustrant une cinquième étape du procédé de surmoulage selon l'invention.

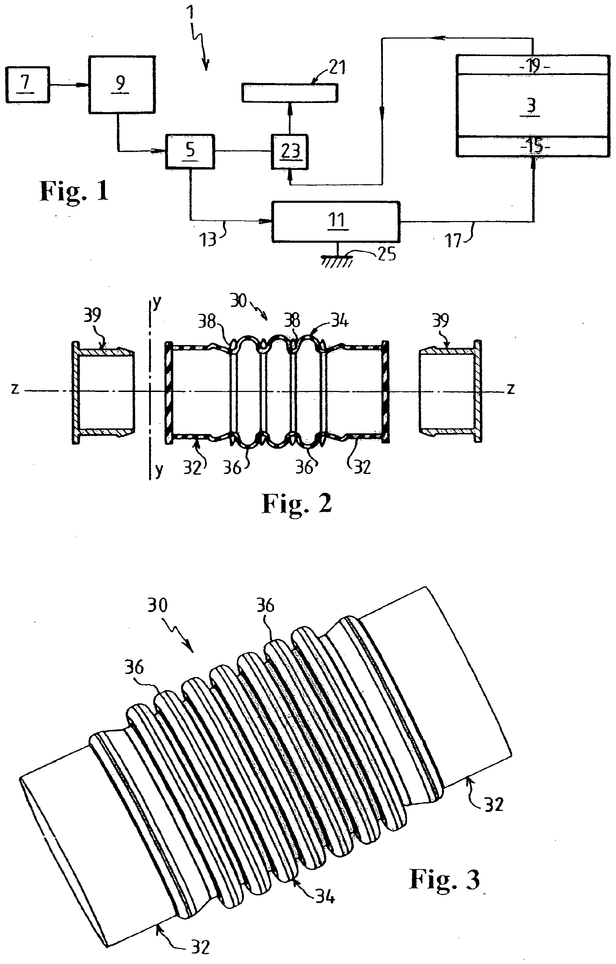

Un système d'admission d'air 1, connu en soi, pour un moteur 3 à turbocompresseur 5 est schématiquement illustré à la figure 1.

Ce système d'admission d'air 1 comprend notamment une prise d'air 7 reliée à l'entrée d'un filtre à air 9 dont la sortie est connectée à l'entrée du turbocompresseur 5, un échangeur de chaleur air/air 11 dont l'entrée est reliée à la sortie du turbocompresseur 5 par une tubulure d'entrée de raccordement 13 et dont la sortie est reliée au collecteur d'admission d'air 15 du moteur 3 par une tubulure de sortie de raccordement 17. Le collecteur d'échappement 19 du moteur 3 est relié au conduit d'échappement 21 avec une boîte de raccordement 23, pour prélever une partie des gaz d'échappement nécessaire à l'alimentation du turbocompresseur 5.

Les tubulures de raccordement 13 et 17 situées de part et d'autre de l'échangeur de chaleur air/air 11 sont généralement constituées par des tubulures métalliques, avec la présence de moyens de découplage tels que des soufflets, lesquels peuvent être respectivement montés à l'entrée et à la sortie de l'échangeur air/air 11 qui est une pièce fixée à la caisse 25 du véhicule.

Le soufflet de découplage 30 illustré aux figures 2 et 3 comprend deux parties d'extrémité de raccordement 32 et une partie centrale 34 présentant des ondulations 36 avec la présence d'anneaux métalliques de maintien 38 situés dans les creux des ondulations 36.

Pour le raccordement du soufflet 30, on prévoit deux embouts métalliques 39 qui sont respectivement engagés dans les deux parties d'extrémité 32 du soufflet 30 et fixés par des colliers de serrage (non représentés). Ce soufflet de découplage comprend généralement au moins une couche interne résistant au fluide transporté, une couche intermédiaire de renfort à mailles par exemple de type tricot textile ou tresse métallique et une couche externe de protection.

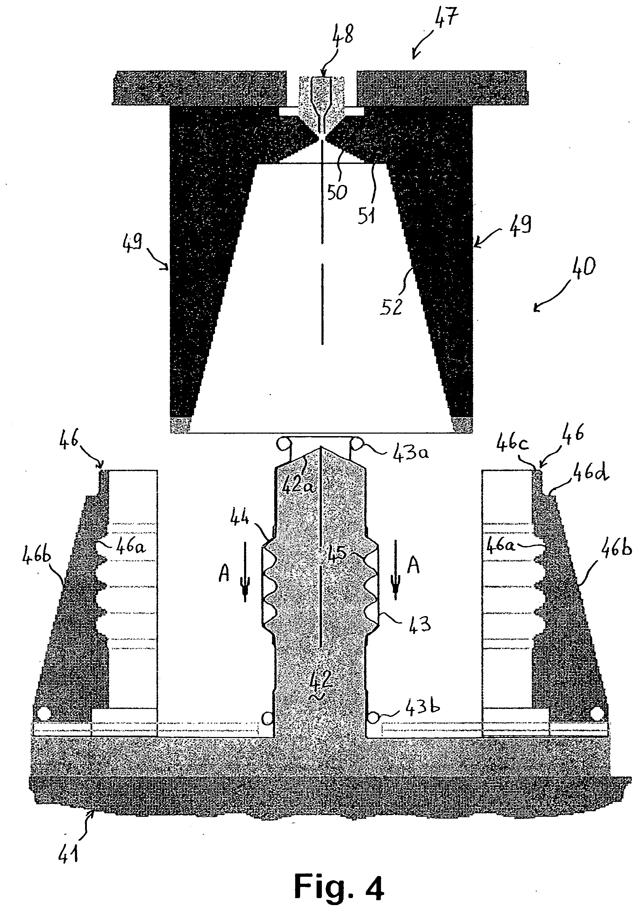

Le moule 40 selon l'invention qui est illustré aux figures 4 à 8 est dans cet exemple un moule de type vertical réalisé en acier, adapté pour l'obtention d'un composite tel qu'un soufflet de découplage 30, et il comporte essentiellement, montés sur un bâti 41 :
- un noyau chauffant 42 d'axe vertical, sur lequel est destiné à être plaqué un insert de renforcement 43 à mailles serrées et qui présente une surface externe sensiblement cylindrique sur laquelle, dans cet exemple de réalisation, sont formées des crêtes 44 et des creux 45 conçus pour former les ondulations 36 du soufflet 30 ;
- deux coquilles latérales 46 mobiles en translation horizontale qui sont adaptées pour enserrer l'insert 43 appliqué sur le noyau 42 et qui présentent chacune à cet effet des faces internes de serrage 46a sensiblement en forme d'arc de cylindre (par exemple de forme hémicylindrique) et qui présente dans cet exemple des creux et des crêtes respectivement complémentaires de ceux du noyau 42 ; et
- un couvercle de fermeture 47 du moule 40 d'axe vertical confondu avec celui du noyau 42 et mobile en translation verticale de sorte à venir fermer réversiblement le sommet 42a du noyau 42 et les coquilles 46, ce couvercle 47 étant pourvu d'une buse d'injection 48 en son centre et comportant, de part et d'autre de celle-ci, un bloc de fermeture 49 dont la face interne, de forme tronconique, est conçue pour épouser les faces externes 46b également tronconiques des coquilles 46.

Plus précisément, on voit à la figure 4 que la face interne du bloc de fermeture 49 présente successivement, radialement vers l'extérieur de la buse d'injection 48 et axialement vers le bas :
- une portion conique divergente 50 qui est conçue pour épouser le sommet 42a également conique du noyau 42 en ménageant un espace interstitiel avec ce sommet 42a,
- une portion d'appui horizontale 51 destinée à appuyer sur le sommet 46c de chaque coquille 46 lorsque cette dernière enserre le noyau 42, de manière à bloquer axialement l'insert de renforcement 43 plaqué sur le noyau 42 via un pincement d'un bord périphérique supérieur 43a de l'insert 43 ayant été retroussé vers l'extérieur,
- puis par une portion tronconique divergente 52 qui prolonge d'abord la portion d'appui 51 en formant avec les coquilles 46 un espace recevant la portion retroussée du bord supérieur 43a via un épaulement supérieur 46d des coquilles 46, et qui se prolonge ensuite pour pouvoir épouser la face externe 46b de celles-ci.

On procède de la manière suivante pour fabriquer le composite selon l'invention, tel que le soufflet de découplage 30.

Dans une première étape illustrée à la figure 4 dans laquelle le moule 40 est en position d'ouverture (les coquilles 46 et le couvercle 47 étant chacun distants du noyau 42), on enfile à la manière d'un fourreau l'insert 43, tel qu'un tricot textile à base de fils en aramide, sur le noyau 42 (voir flèches A).

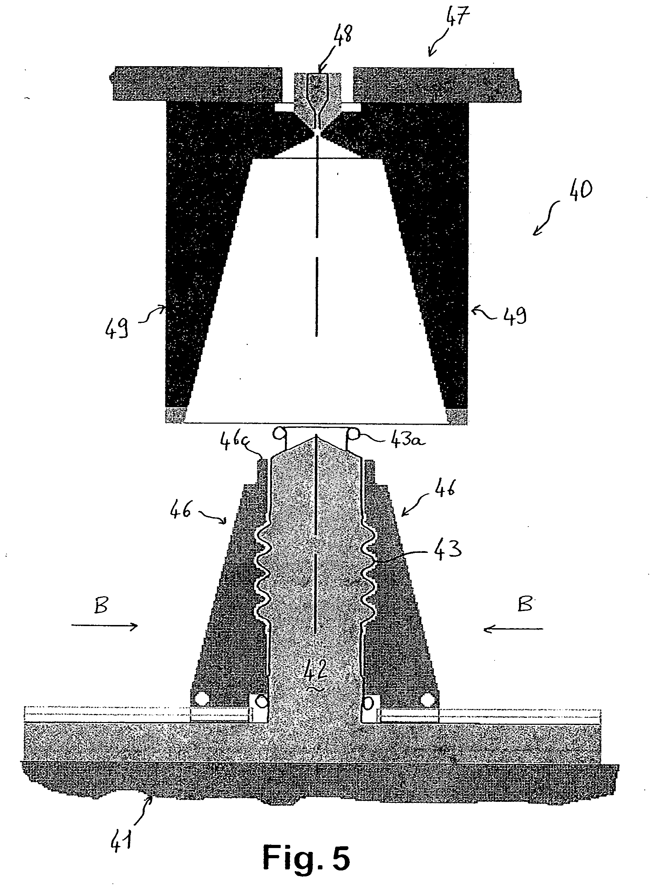

Dans une seconde étape illustrée à la figure 5, on commande la fermeture des coquilles 46 sur le noyau 42 en les déplaçant en translation horizontale (voir flèches B) de sorte qu'elles viennent plaquer l'insert 43 contre le noyau 42, en lui faisant prendre la forme de la surface de celui-ci à l'emplacement des creux et des crêtes formées d'une manière complémentaire sur le noyau 42 et les coquilles 46. On obtient ainsi un insert 13 préformé qui présente, dans sa partie axialement centrale, les ondulations précitées.

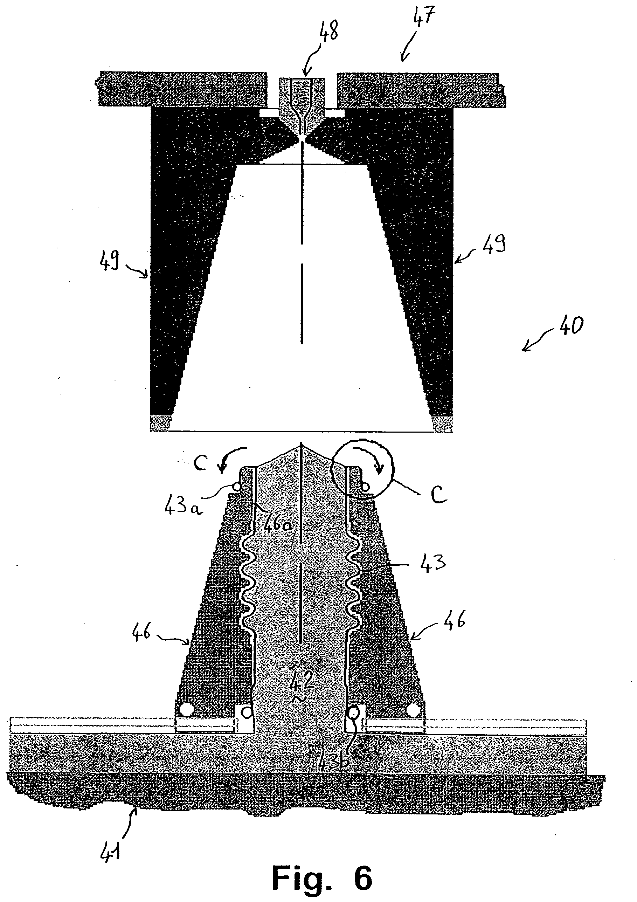

Dans une troisième étape illustrée à la figure 6, on retrousse radialement vers l'extérieur puis axialement vers le bas (voir flèches C) le bord supérieur 43a de l'insert 43, en le disposant sur l'épaulement supérieur 46d formé par la réunion des coquilles 46 (le bord périphérique inférieur 43b de l'insert étant entouré par celles-ci, en dessous de leur face interne de serrage 46a).

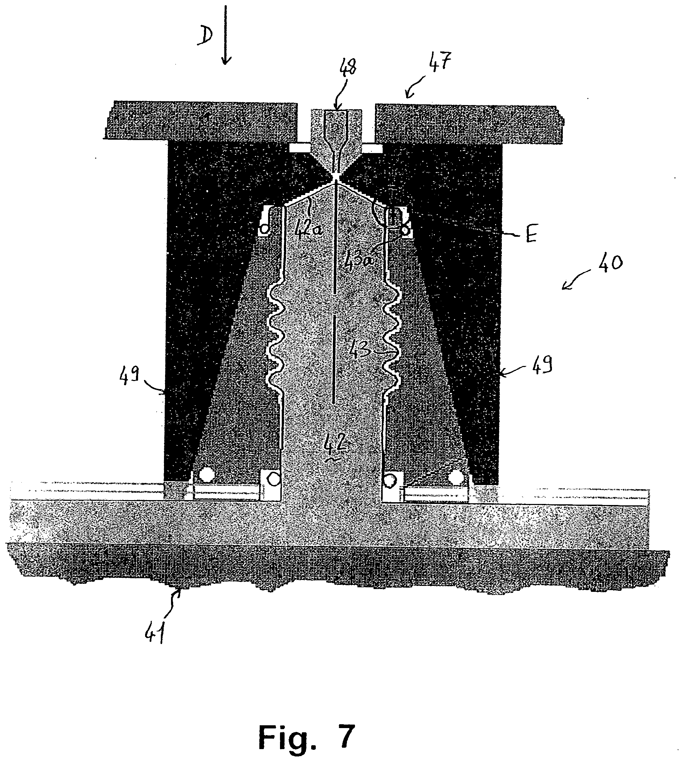

Dans une quatrième étape illustrée à la figure 7, on commande la fermeture du couvercle (voir flèche D) vers le bas, de telle sorte qu'il vienne épouser avec jeu le sommet 42a du noyau 42 et pincer fortement (voir flèche E) la portion retroussée du bord supérieur 43a qui repose sur le sommet 46c des coquilles 46, tout en enserrant latéralement ces dernières. On bloque ainsi axialement l'insert 43 en vue des contraintes inhérentes au surmoulage ultérieur.

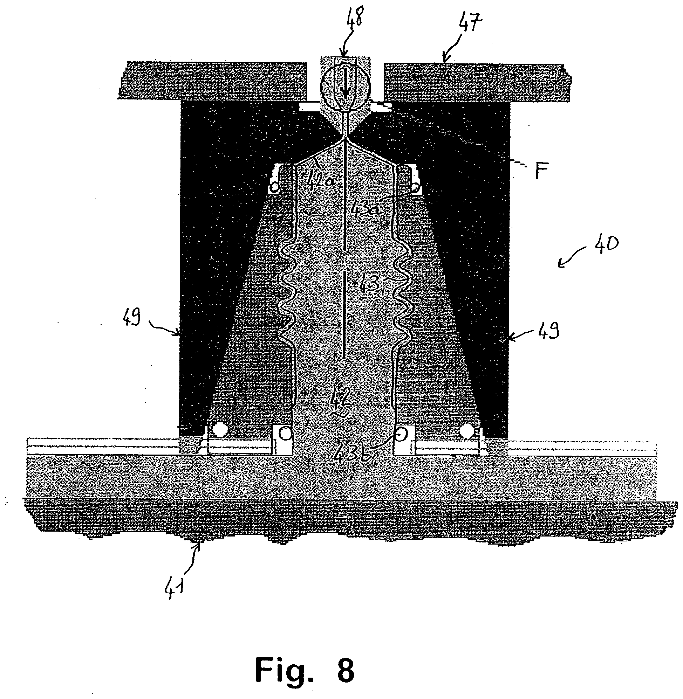

Dans une cinquième étape illustrée à la figure 8, on procède via la buse 48 à l'injection (voir flèche F) de la ou chaque composition de polymère sur la face radialement interne de l'insert 43 préformé, sous une température par exemple comprise entre 175° C et 200° C, la pression relative à ce surmoulage se traduisant par exemple par une force de traction de l'ordre de 4.10⁵ N. Comme cela est visible à cette figure 8, la composition de polymère injectée s'écoule ainsi dans un premier temps sur la surface conique du sommet 42a du noyau 42, puis remplit de force l'espace interstitiel sensiblement cylindrique entre le noyau 42 et l'insert 43 qui est issu du retroussement du bord supérieur 43a de l'insert 43, pour s'arrêter au-dessus du bord inférieur 43b.

Selon l'invention, ces conditions de surmoulage font que la composition de polymère injectée recouvre non seulement la face radialement interne de l'insert 43 avec une homogénéité axiale et radiale satisfaisante pour former ladite couche interne, mais également sa face radialement externe en traversant les mailles très serrées de ce dernier et sans les déformer, pour former ladite couche de protection d'épaisseur moindre. La pression de surmoulage crée une liaison entre les différents filaments du textile et la matière injectée. Ledit textile peut être enduit d'un adhésif pour renforcer encore l'adhésion.

On procède ensuite à la réticulation de la ou chaque composition de polymère recouvrant l'insert 43, via un chauffage effectué dans ce même moule 40 au moyen du noyau 42.

## Revendications

1. Procédé de fabrication d'au moins un composite (30) polymère(s)/ renfort textile ou métallique au moins en partie à surface de révolution, ledit ou chaque composite comprenant au moins un insert de renforcement (43) à mailles qui est de type tricot, tissu ou tresse et qui est recouvert par une composition de polymère au moins sur une face dudit insert, ledit procédé comprenant un surmoulage dudit insert par ladite composition de polymère, via une injection de cette dernière dans un moule à injection (40, 60) contenant ledit ou chaque insert, ledit insert (43) étant préformé au moins en partie selon ladite surface de révolution par une compression radiale dudit insert préalablement positionné sur un noyau (42 ou 63) dudit moule (40 ou 60), via la fermeture de coquilles (46 ou 61, 62) dudit moule contre ledit noyau, ladite compression plaquant ledit insert à l'état préformé sur ledit noyau, tel que l'on utilise pour ce moule à injection (40) un moule de type vertical, de telle manière que ladite composition de polymère injectée s'écoule dans un premier temps sur la surface du sommet (42a) du noyau (42), puis remplit de force l'espace interstitiel sensiblement cylindrique entre le noyau (42) et l'insert (43), l'écoulement se produisant vers le bas et axialement, i.e. parallèlement à l'axe de révolution dudit insert, sur une face radialement interne dudit insert (43) préformé, et en ce qu'avant et pendant ce surmoulage, on bloque ledit insert (43) préformé via l'exercice d'une pression sur un premier bord périphérique d'extrémité (43a) dudit insert.

2. Procédé selon la revendication 1, **caractérisé en ce que** ledit ou chaque composite (30) présente une pluralité de crêtes qui sont séparées deux à deux entre elles par des creux, de sorte à former des ondulations périphériques (36) faisant saillie radialement vers l'extérieur dudit composite, et/ou présente au moins un coude à extrémité cylindrique ou tronconique.

3. Procédé selon une des revendications précédentes, **caractérisé en ce que** l'on injecte ladite composition de polymère à une pression telle que celle-ci traverse les mailles dudit insert (43) préformé, de telle sorte que ledit ou chaque composite (30) présente ladite composition de polymère sur chacune de ses deux faces radialement interne et externe.

4. Procédé selon l'une des revendications précédentes, **caractérisé en ce que** l'on bloque axialement ledit insert préformé par un pincement d'une portion de retroussement dudit premier bord périphérique d'extrémité (43a), suite à la fermeture d'un couvercle (47) dudit moule (40) que l'on amène en regard d'une extrémité (42a) dudit noyau (42) et contre lesdites coquilles (46).

5. Procédé selon l'une des revendications 1 à 3, **caractérisé en ce que** l'on bloque radialement ledit insert (43) préformé par un pincement dudit premier bord périphérique d'extrémité mis en oeuvre via un serrage de deux demi-coquilles extérieures contre une coiffe supérieure d'un couvercle dudit moule que l'on amène en regard d'une extrémité (42a) dudit noyau (42), ce premier bord d'extrémité de l'insert étant pincé entre ces demi-coquilles et cette coiffe.

6. Procédé selon la revendication 4 ou 5, **caractérisé en ce que** l'on injecte ladite composition de polymère via une buse d'injection (48) dont la sortie communique avec un espace interstitiel compris entre ledit couvercle (47) et ladite extrémité (42a) dudit noyau (42).

7. Procédé selon la revendication 6, **caractérisé en ce que** ladite composition de polymère injectée s'écoule du centre de ladite extrémité (42a) dudit noyau (42) vers ledit premier bord périphérique d'extrémité (43a) dudit insert (43), puis axialement jusqu'à un second bord périphérique d'extrémité (43b) dudit insert.

8. Procédé selon la revendication 7, **caractérisé en ce que** ladite extrémité (42a) dudit noyau (42) présente une surface adaptée pour permettre l'écoulement de ladite composition de polymère vers ledit premier bord périphérique d'extrémité (43a).

9. Procédé selon une des revendications précédentes, **caractérisé en ce que** ledit insert (43) est de type tricot textile, tel qu'un tricot à mailles « Jersey ».

10. Procédé selon la revendication 9, **caractérisé en ce que** ledit insert (43) comporte des fils à base d'aramide et/ou d'un polyester.

11. Procédé selon une des revendications précédentes, **caractérisé en ce que** ladite composition de polymère est à base d'au moins un élastomère qui est apte à résister aux huiles et à l'air comprimé et qui est choisi dans le groupe constitué par les polyacrylates, les copolymères d'éthylène et d'acrylate de méthyle, les élastomères fluorocarbonés, les élastomères fluorosilicones, les polyéthylènes chlorosulfonés, les polychloroprènes, les caoutchoucs nitriles et les vulcanisats thermoplastiques (TPV).

12. Procédé selon les revendications 10 et 11, **caractérisé en ce que** ladite composition de polymère est à base d'un polyacrylate ou d'un copolymère d'éthylène et d'acrylate de méthyle.

13. Composite (30) polymère(s)/ renfort textile ou métallique au moins en partie à surface de révolution, tel qu'une durite destinée à transporter de l'air comprimé, ledit composite comportant au moins un insert de renforcement (43) à mailles qui est de type tricot, tissu ou tresse et qui est recouvert d'au moins une composition de polymère sur l'une au moins de ses faces, tel que ledit composite est moulé par injection, en ce que ladite composition de polymère est à base d'au moins un élastomère qui est apte à résister aux huiles et à l'air comprimé et qui est choisi dans le groupe constitué par les polyacrylates, les copolymères d'éthylène et d'acrylate de méthyle, les élastomères fluorocarbonés, les élastomères fluorosilicones, les polyéthylènes chlorosulfonés, les polychloroprènes, les caoutchoucs nitriles et les vulcanisats thermoplastiques (TPV), et en ce que le composite est obtenu par un procédé selon une des revendications précédentes de telle sorte que cette même composition de polymère recouvre la face radialement interne de l'insert (43) de manière homogène dans les directions axiale et radiale et recouvre en outre la face radialement externe de l'insert.

14. Soufflet de découplage (30) droit ou coudé, en particulier pour un système d'admission d'air (1) dans un moteur (3) à turbocompresseur (5) d'un véhicule automobile, ledit soufflet présentant une pluralité de crêtes qui sont séparées deux à deux entre elles par des creux de sorte à former des ondulations périphériques (36), tel qu'il est constitué d'un composite selon la revendication 13.

## Patentansprüche

1. Verfahren zur Herstellung mindestens eines Verbundstoffs (30) aus Polymer(en) / einer Textil- oder Metallverstärkung mit mindestens teilweise einer Rotationsfläche, wobei der oder jeder Verbundstoff mindestens einen Verstärkungseinsatz (43) mit Maschen umfasst, der gestrickt, gewebt oder geflochten ist und der mit einer Polymerzusammensetzung mindestens auf einer Seite des Einsatzes bedeckt ist, wobei das Verfahren ein Aufformen des Einsatzes durch die Polymerzusammensetzung durch Einspritzen dieser in eine Spritzgussform (40, 60), die den oder jeden Einsatz enthält, umfasst, wobei der Einsatz (43) zumindest teilweise entsprechend der Rotationsfläche durch radiale Kompression des Einsatzes, der zuvor auf einem Kern (42 oder 63) der Gussform (40 oder 60) angeordnet war, über das Schließen von Schalen (46 oder 61, 62) der Gussform gegen den Kern vorgeformt wird, wobei der Einsatz durch die Kompression in einem vorgeformten Zustand gegen den Kern gedrückt wird, so dass für die Spritzgussform (40) eine vertikale Gussform verwendet wird, derart, dass die eingespritzte Polymerzusammensetzung zunächst auf die Oberfläche des Scheitels (42a) des Kerns (42) fließt, und dann den im Wesentlichen zylindrischen Zwischenraum zwischen dem Kern (42) und dem Einsatz (43) kraftvoll ausfüllt, wobei die Strömung axial nach unten erfolgt, d.h. parallel zur Rotationsachse des Einsatzes auf einer radial inneren Seite des vorgeformten Einsatzes (43), und dass vor und während dieses Aufformens der vorgeformte Einsatz (43) durch Ausübung von Druck auf eine erste Umfangsendkante (43a) des Einsatzes blockiert wird.

2. Verfahren nach Anspruch 1, **dadurch gekennzeichnet, dass** der oder jeder Verbundstoff (30) eine Mehrzahl von Erhebungen aufweist, die untereinander paarweise durch Vertiefungen getrennt sind, um periphere Wellen (36) zu bilden, die radial zur Außenseite des Verbundstoffs vorstehen, und/oder mindestens einen Krümmer mit einem zylindrischen oder kegelstumpfförmigen Ende aufweist.

3. Verfahren nach einem der vorhergehenden Ansprüche, **dadurch gekennzeichnet, dass** die Polymerzusammensetzung mit einem solchen Druck eingespritzt wird, dass sie durch die Maschen des vorgeformten Einsatzes (43) hindurchgeht, so dass der oder jeder Verbundstoff (30) die Polymerzusammensetzung auf jeder seiner beiden radial inneren und äußeren Seiten aufweist.

4. Verfahren nach einem der vorhergehenden Ansprüche, **dadurch gekennzeichnet, dass** der vorgeformte Einsatz durch ein Einklemmen eines Bündelabschnitts der ersten Umfangsendkante (43a) nach dem Schließen einer Abdeckung (47) der Gussform (40), die einem Ende (42a) des Kerns (42) zugewandt und gegen die Schalen (46) gebracht wird, axial blockiert wird.

5. Verfahren nach einem der Ansprüche 1 bis 3, **dadurch gekennzeichnet, dass** der vorgeformte Einsatz (43) radial durch ein Einklemmen der ersten Umfangsendkante, die durch Einspannen von zwei äußeren Halbschalen gegen eine obere Kappe einer Abdeckung der Gussform ausgeführt wird, die gegenüber einem Ende (42a) des Kerns (42) in Stellung gebracht wird, wobei diese erste Endkante des Einsatzes zwischen den Halbschalen und der Kappe eingeklemmt ist.

6. Verfahren nach Anspruch 4 oder 5, **dadurch gekennzeichnet, dass** die Polymerzusammensetzung über eine Einspritzdüse (48) eingespritzt wird, deren Auslass mit einem Zwischenraum zwischen der Abdeckung (47) und dem Ende (42a) des Kerns (42) in Verbindung steht.

7. Verfahren nach Anspruch 6, **dadurch gekennzeichnet, dass** die eingespritzte Polymerzusammensetzung von dem Zentrum des Endes (42a) des Kerns (42) zu der ersten Umfangsendkante (43a) des Einsatzes (43), dann axial bis zu einer zweiten Umfangsendkante (43b) des Einsatzes fließt.

8. Verfahren nach Anspruch 7, **dadurch gekennzeichnet, dass** das Ende (42a) des Kerns (42) eine Oberfläche aufweist, die geeignet ist, den Fluss der Polymerzusammensetzung zu der ersten Umfangsendkante (43a) zu ermöglichen.

9. Verfahren nach einem der vorhergehenden Ansprüche, **dadurch gekennzeichnet, dass** der Einsatz (43) vom Typ eines textilen Gestricks, wie zum Beispiel eines "Jersey"-Maschengestricks, ist.

10. Verfahren nach Anspruch 9, **dadurch gekennzeichnet, dass** der Einsatz (43) Garne auf Basis von Aramid und/oder Polyester umfasst.

11. Verfahren nach einem der vorhergehenden Ansprüche, **dadurch gekennzeichnet, dass** die Polymerzusammensetzung auf mindestens einem Elastomer basiert, das öl- und druckluftbeständig ist und ausgewählt ist aus der Gruppe bestehend aus Polyacrylaten, Copolymeren von Ethylen und Methylacrylat, Fluorkohlenstoffelastomeren, Fluorsilikonelastomeren, chlorsulfonierten Polyethylenen, Polychloroprenen und Nitrilkautschuken und thermoplastischen Vulkanisaten (TPV).

12. Verfahren nach Ansprüche 10 und 11, **dadurch gekennzeichnet, dass** die Polymerzusammensetzung auf einem Polyacrylat oder Copolymer von Ethylen und Methylacrylat basiert.

13. Verbundstoff (30) aus Polymer(en) / einer Textil- oder Metallverstärkung mit mindestens teilweise einer Rotationsfläche, wie zum Beispiel einem zur Druckluftbeförderung vorgesehenen Schlauch, wobei der Verbundstoff mindestens einen Verstärkungseinsatz (43) mit Maschen enthält, der gestrickt, gewebt oder geflochten ist und der auf mindestens einer seiner Seiten mit mindestens einer Polymerzusammensetzung bedeckt ist, derart, dass der Verbundstoff spritzgegossen wird, so dass die Polymerzusammensetzung auf mindestens einem Elastomer basiert, das öl- und druckluftbeständig ist und ausgewählt ist aus der Gruppe bestehend aus Polyacrylaten, Copolymeren von Ethylen und Methylacrylat, Fluorkohlenstoffelastomeren, Fluorsilikonelastomeren, chlorsulfonierten Polyethylenen, Polychloroprenen und Nitrilkautschuken und thermoplastischen Vulkanisaten (TPV), und dass der Verbundstoff durch ein Verfahren nach einem der vorhergehenden Ansprüche derart erhalten wird, dass diese Polymerzusammensetzung die radial innere Fläche des Einsatzes (43) in axialer und radialer Richtung homogen bedeckt und weiterhin die radial äußere Fläche des Einsatzes bedeckt.

14. Gerade oder gekrümmte Entkopplungsmanschette (30), insbesondere für ein Luftzufuhrsystem (1) in einem Motor (3) mit Turbokompressoren (5) eines Kraftfahrzeugs, wobei die Manschette eine Mehrzahl von Erhebungen aufweist, die untereinander paarweise durch Vertiefungen getrennt sind, um periphere Wellen (36) zu bilden, derart dass sie aus einem Verbundstoff nach Anspruch 13 besteht.

## Claims

1. Method of forming at least one polymer/textile or metal composite (30) at least in part with a surface of revolution, said or each composite comprising at least one stitch-reinforcement insert (43) which is of the knitted, fabric or woven type, and which is covered by a polymer composition at least on one face of said insert, said method comprising an overmoulding of said insert by said polymer composition, via an injection of the latter into an injection mould (40, 60) containing said or each insert, said insert (43) being preformed at least in part according to said surface of revolution by a radial compression of said insert previously positioned on a core (42 or 63) of said mould (40 or 60), via the closure of support shells (46 or 61, 62) of said mould against said core, said compression flattening said insert to the preformed state on said core, such as is used for this injection mould (40), a vertical type mould, such as said injected polymer composition initially flows over the surface of the tip (42a) of the core (42), then forcibly fills substantially cylindrical interstitial space between the core (42) and the insert (43), the flow being produced towards the bottom and axially, i.e. parallel to the axis of revolution of said insert, over a radially inner face of said preformed insert (43), and in that before and during this overmoulding, said preformed insert (43) is blocked via the exertion of a pressure on a first peripheral end edge (43a) of said insert.

2. Method according to claim 1, **characterised in that** said or each composite (30) has a plurality of ridges which are separated two-by-two between them by cavities, so as to form peripheral waves (36) protruding radially towards the outside of said composite, and/or has at least one bend with a cylindrical or truncated end.

3. Method according to one of the preceding claims, **characterised in that** said polymer composition is injected at a pressure such as that crossing the stitches of said preformed insert (43), such that said or each composite (30) has said polymer composition on each one of the two radially inner and outer faces thereof.

4. Method according to one of the preceding claims, **characterised in that** said performed insert is axially blocked by a clamping of a winding portion of said first peripheral end edge (43a) following the closure of a cover (47) of said mould (40) that is brought opposite an end (42a) of said core (42) and against said support shells (46).

5. Method according to one of claims 1 to 3, **characterised in that** said performed insert (43) is radially blocked by a clamping of said first peripheral end edge implemented via a tightening of two outer half-shells against an upper cap of a cover of said mould that is brought opposite an end (42a) of said core (42), this first end edge of the insert being clamped between these half-shells and this cap.

6. Method according to claim 4 or 5, **characterised in that** said polymer composition is injected via an injection nozzle (48) of which the outlet communicates with an interstitial space between said cover (47) and said end (42a) of said core (42).

7. Method according to claim 6, **characterised in that** said injected polymer composition flows from the centre of said end (42a) of said core (42) towards said first peripheral end edge (43a) of said insert (43), then axially up to a second peripheral end edge (43b) of said insert.

8. Method according to claim 7, **characterised in that** said end (42a) of said core (42) has an adapted surface to enable the flow of said polymer composition towards said first peripheral end edge (43a).

9. Method according to one of the preceding claims, **characterised in that** said insert (43) of the knitted textile type, such as a "Jersey" stitched knitted item.

10. Method according to claim 9, **characterised in that** said insert (43) comprises aramid and/or polyester-based threads.

11. Method according to one of the preceding claims, **characterised in that** said polymer composition is based on at least one elastomer which is capable of resisting oils and compressed air and which is chosen in the group constituted by polyacrylates, ethylene copolymers, and methyl acrylate, fluorocarbon elastomers, fluorosilicon elastomers, chlorosulphonated polyethylenes, polychloroprenes, nitrile rubbers and thermoplastic vulcanizates (TPVs).

12. Method according to claims 10 and 11, **characterised in that** said polymer composition is based on a polyacrylate or an ethylene copolymer and methyl acrylate.

13. Polymer/textile reinforcement or metal composite (30) at least in part with a surface of revolution, such as a hose intended to transport compressed air, said composite comprising at least one stitched reinforcing insert (43) which is of the knitted, fabric or woven type and which is covered by a polymer composition on at least one of the faces thereof, such as said composite is injection moulded, in that said polymer composition is based on at least one elastomer which is capable of resisting oils and compressed air and which is chosen in the group constituted by polyacrylates, ethylene copolymers, and methyl acrylate, fluorocarbon elastomers, fluorosilicon elastomers, chlorosulphonated polyethylenes, polychloroprenes, nitrile rubbers and thermoplastic vulcanizates (TPVs), and in that the composite is obtained by a method according to one of the preceding claims such that this same polymer composition covers the radially inner face of the insert (43) homogenously in the axial and radial directions, and further covers the radially outer face of the insert.

14. Straight or bent uncoupling bellow (30), in particular for an air inlet system (1) in a turbocharged (5) engine (3) of a motor vehicle, said bellow having a plurality of ridges which are separated two-by-two between them by cavities, so as to form peripheral waves (36), such as is constituted by a composite according to claim 13.
